# EUROPEAN PATENT APPLICATION

(11) **EP 4 660 449 A1**
(43) Date of publication of application: **10.12.2025**
(21) Application number: 24180544.9
(22) Date of filing: 06.06.2024
(51) Int. Cl.: F03D 7/02, F03D 13/10

(54) **ROTOR POSITIONING OR PREPARATION FOR MOUNTING AND/OR UNMOUNTING A ROTOR BLADE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

It is described a method of preparing for mounting a rotor blade (8) to a hub (4) of a wind turbine (1), the hub being mechanically coupled to a rotor (5) of a generator (2), the method comprising: controlling the generator (2), in order to turn the hub (4) using torque generated by the generator (2), in particular according to a reference rotational speed; monitoring a quantity (14) indicative of an oscillation of the hub and/or a drive train; processing the quantity (14) in order to derive a strength (16) of the oscillation at at least one frequency; detecting when the strength (16) of the oscillation at at least one frequency exceeds a first, in particular frequency dependent, threshold (44), thereby indicating a critical situation; if the critical situation is indicated: reducing the reference rotational speed (18) for turning the hub (4) by generator produced torque; controlling the generator (2) based on the reduced reference rotational speed (18_1, 18_2,...).

## Description

### Field of invention

The present invention relates to a method and to a corresponding arrangement of preparing for mounting and/or unmounting a rotor blade to a hub of a wind turbine. Further, the present invention relates to a method and also a corresponding arrangement for mounting to and/or unmounting a rotor blade from a hub of a wind turbine. Furthermore, the present invention relates to a wind turbine.

### Art Background

Rotor blades of a wind turbine are conventionally mounted at a final installation site of the wind turbine after the wind turbine tower has already been erected. Conventionally, a rotor blade can be mounted at a hub when in an essentially horizontal orientation. In order to rotate the hub to the appropriate position, i.e., azimuthal position, the wind turbine generator may be operated in a motor mode in order to turn the hub. Conventionally, however, during the positioning of the hub into the appropriate position or during the actual mounting of the rotor blade, problems have been observed during or relating to the exact positioning and/or fixing the hub to a stationary part of the wind turbine.

Thus, there may be a need for a method and a corresponding arrangement for preparing for mounting and/or of mounting a rotor blade to a hub of a wind turbine. Furthermore, there may be a need to a wind turbine which is capable of supporting the method for preparation for mounting or which is configured to support or carry out the method of mounting the rotor blade to the hub of the wind turbine.

### Summary of the Invention

This need may be met by the subject matter according to the independent claims. Advantageous embodiments of the present invention are described by the dependent claims.

According to an embodiment of the present invention it is provided a method of rotor positioning or of preparing for mounting a rotor blade to a hub of a wind turbine or for unmounting a rotor blade from a hub, the hub being mechanically coupled to a rotor of a generator, the method comprising: controlling the generator, in order to turn the hub using torque generated by the generator, in particular according to a (e.g. nominal) reference rotational speed; monitoring a quantity indicative of an oscillation of the hub and/or a drive train; processing the quantity in order to derive a strength of the oscillation at at least one frequency; detecting when the strength of the oscillation at at least one frequency exceeds a first (e.g. stopping), in particular frequency dependent, threshold, thereby indicating a critical situation; if the critical situation is indicated: reducing the reference rotational speed for turning the hub by generator produced torque; controlling the generator based on the reduced reference rotational speed.

The method may in particular be performed by an arrangement of rotor positioning or preparing for mounting/unmounting a rotor blade to/from a hub of the wind turbine according to embodiments of the present invention. The method may be implemented in software and/or hardware and may for example be performed by a control module of the wind turbine.

Upon rotation of the rotor, the generator may produce/consume electrical AC power. The (single or multiple winding set) generator may be electrically connected to one or more converter(s) (in particular one converter for each (group) of winding set), in particular including an AC/DC portion, a DC link and a DC/AC portion, and which may be configured to convert a variable AC frequency power stream to a substantially fixed frequency AC power stream. The converter, if present, may comprise plural controllable switches, such as power transistors, in particular IGBTs.

The generator may be for example a synchronous generator, more in particular a permanent magnet synchronous generator. The rotor may be an outer rotor being supported to rotate radially outwards of a stator of the generator. The stator of the generator may be composed of one or more generator stator segments each segment for example spanning an angle section of an entire circumference. The generator may be controlled by sending control signals to the generator and/or converter. The control signals sent to the converter may for example comprises a reference speed and/or reference position and/or reference torque and/or reference currents and/or reference voltages.

During performing the method, zero, one or more (e.g. three) rotor blades may already be mounted at the hub. The method may be performed on a balanced or unbalanced hub/rotor. In particular, during performing the method, substantial gravitational load may be present (or may not be present for balanced hub/rotor) which may act for example opposite to a turning direction of the hub. The gravitationally induced load may be at least compensated by the torque as generated by the generator and the torque generated by the generator may be high enough in order to slowly turn the hub against gravitational load.

The method may be supporting general rotor positioning and in particular an electrical horizontal single blade mounting (eHSBM). The electrical drive train driven by the generator thereby may turn the rotor of the turbine slowly, typically around 0.05 rpm, and then the hub is held stationary once the target position within a fraction of a (mechanical) degree is reached. The method may be performed with a balanced rotor (three or zero blades already mounted) and/or also for an unbalanced rotor (for example one or two blades already mounted). The mounting of the rotor blade may not require any hydraulic tool dedicated to blade installation in order to turn the hub.

Monitoring the quantity indicative of an oscillation of the hub and/or the drive train may for example include to monitor a rotational speed of the hub and/or an azimuthal position of the hub and/or an acceleration of the rotation of the hub. The quantity may for example be obtained from a sensor for example sensing the rotational speed and/or rotational position of the hub and/or blade moments. The quantity may either be directly measured or may be estimated or calculated from other for example electrical quantities, such as power output, current, voltage as produced by the generator or as present on the stator windings.

The quantity may be processed by one or more filters, in order to for example derive the amplitude and/or intensity of the oscillation at at least one frequency or frequency band. Embodiments of the present invention may support applying the method for oscillations of more than one frequency (band), for example two frequencies (bands), three frequencies (bands), four frequencies (bands) or even more frequencies (bands). For each frequency (band), a respective processing may be performed and a respective logic may be performed, in order to identify or detect a critical situation. Thereby, for example, a logic module may be utilized in order to detect when the strength of the oscillation of at least one frequency exceeds a first threshold. The first threshold may for example be frequency-dependent thereby enabling a high flexibility of the method in order to adapt the method to the particular application.

E.g. a 2nd order band pass filter may be used to select the frequency of interest. A band of frequencies selected by the filters centre frequency and q factor may be considered.

In the normal situation for preparing mounting a blade, the turning of the hub using the torque generated by the generator may be performed according to a reference rotational speed, i.e., a very low rotational speed between e.g. 0.03 rpm and 0.1 rpm, for example. When the critical situation is indicated, turning the hub may be continued by generated torque but the rotational turning speed may be reduced. According to particular embodiments, the reference rotational speed may be abruptly decreased to zero but in other embodiments, the reference rotational speed may be smoothly reduced to zero or a value about zero rotational speed.

According to a particular embodiment, the reduced reference rotational speed (or a quantity derived therefrom) may be supplied to the converter based on which the converter or in particular a gate driver signal generator may generate appropriate gate driver signals which are then supplied to the plural controllable switches. According to other embodiments, the reference rotational speed may be received by another module which based on the reference rotational speed may derive control signals which are then supplied to the converter which may for example include the kind of (converter) control signals as cited above.

The method may address an observed problem that during the preparation for rotor blade mounting, a build-up of oscillations is observed in the rotor speed feedback signal at some specific frequencies. Oscillations which may be addressed by embodiments of the present invention may for example include the first and second blade edge oscillation frequencies as well as other frequencies for example a 0.19 Hz frequency. When the reference rotational speed and thus also the actual rotational speed with which the hub is rotated due to generated generator generated torque is reduced, the oscillation may fade or damp down such that the strength of amplitude or intensity of the oscillation(s) decreases. Thereby, any damage to wind turbine components may be avoided and the mounting process may then continue for example also involving to increase rotational speed again from the reduced reference rotational speed for example to a nominal reference rotational speed.

Thus, embodiments of the present invention mitigate or even avoid critical oscillation build-up in rotor blade mounting. According to embodiments of the present invention, a "pause/resume" feature is proposed for detecting and damping rotor oscillations. Thereby, the speed feedback signal (or an azimuth position signal) may be continually monitored for oscillations at certain frequencies. If the intensity or amplitude or strength of one or more oscillations at one or more frequencies is above a predefined amplitude threshold (for example the first threshold), a pause command may be triggered from the control system. During a pause, the rotor blade may be held stationary mid-sequence or the hub is held stationary mid-sequence until the oscillations decay to safe levels. When the oscillation amplitude falls below the threshold, a resume command may be sent to the generator and/or converter and the hub may continue its rotation or movement towards the target azimuthal position.

It should be noted that during rotor positioning operation, the control variable can be either the angular position or the rotor speed or even another control variable. In the case of the angular position, the angle reference may be ramped towards the final angular target, and the controller may work to reduce the error between the angle feedback and the angle reference. The ramp rate of the angular reference may be set based on a speed reference. In the case of rotor speed as the control variable, the rotor speed reference is set to some constant value (typically 0.05 rpm) and the controller may similarly reduce the error between the speed feedback and the speed reference. The method may be applicable to both these modes of operation or modes of control.

According to an embodiment of the present invention, if the critical situation is indicated, the reference rotational speed is reduced from a nominal reference rotational speed, in particular between 0.03 and 0.07 rpm, or substantially 0.05 rpm, in a linear manner and/or in a step-wise manner and/or according to a non-linear manner and/or S-shaped and/or a combination thereof.

The reference rotational speed may either be reduced to zero or to a value larger or greater than zero according to the particular application. The timespan during which the reference rotational speed may be reduced may be for example between 5 and 30 seconds. Thereby, the method may be adapted to the particular configuration of the generator and/or the hub.

According to an embodiment of the present invention, if the critical situation is indicated and/or endures, the method comprises at least one of: reducing the reference rotational speed to zero; stopping turning the hub by stopping movement of the hub due to generator generated torque; holding the hub at the position which was reached when the strength of the oscillation started exceeding the first threshold; generating torque by the generator to hold the hub at a fixed position; switching from speed control to position control; switching from position control with none stiff gains to stiff gains. Thereby, flexibility and safety may be ensured.

According to an embodiment of the present invention, the method further comprises detecting when the strength of the oscillation at at least one frequency falls below a second (e.g. resuming) threshold, indicating that the critical situation is over; if the critical situation is indicated to be over, performing at least one of: stopping reducing the reference rotational speed; increasing the reduced reference rotational speed, in particular to the nominal reference rotational speed; resuming turning the hub, in particular with the nominal reference rotational speed, wherein the first threshold is in particular greater than the second threshold. Thereby, the procedure for actually mounting a rotor blade may be continued in a safe manner.

According to an embodiment of the present invention, the quantity indicative of the oscillation includes at least one of the following: an angular or azimuthal position of the hub; a rotational speed of the hub; and/or wherein controlling the generator is further based on azimuthal position control and/or rotational speed control.

The rotational speed of the hub may for example be measured by an encoder or another sensor or may for example be estimated from electrical quantities of the generator. The angular or azimuthal position of the hub may for example be measured by an encoder or may be estimated by an observer receiving electrical input quantities from the generator.

According to an embodiment of the present invention, processing the quantity in order to derive the strength of the oscillation at at least one frequency comprises at least one of: receiving a raw signal of the quantity; applying a bandpass filter to the raw signal; determining an intensity and/or amplitude and/or peak to peak distance of the filtered raw signal, indicating the actual strength; applying a low pass filter to the actual strength to obtain the strength. Thereby, a particular implementation may be provided which may be implemented by conventionally available modules or equipment.

According to an embodiment of the present invention, the at least one frequency comprises at least one (or more) resonance frequency of a drive train, including the hub and/or a rotor of the generator and/or already mounted one or more rotor blades, in particular at least one blade edge frequency, the at least one frequency in particular being between 0.1 Hz and 2 Hz. Thereby, oscillations of different origins which may occur at the hub may effectively be addressed, in particular damped or mitigated or even avoided.

According to an embodiment of the present invention, the method is performed for positioning the hub to a target azimuthal position, in order to mount the rotor blade being in a horizontal orientation. In order to mount a horizontally oriented rotor blade, the hub may be required to be in a particular target azimuthal position such that a rotor blade mounting connector of the hub can be oriented appropriately for a hub mounting connector at the root end of the rotor blade. Thus, horizontal blade mounting may be effectively supported.

According to an embodiment of the present invention, controlling the generator is via a converter connected to the generator; and/or wherein the generator is a permanent magnet synchronous generator; and/or wherein the generator rotor is an outer rotor. Thereby, conventionally available wind turbine configurations or generator configurations may be supported.

According to an embodiment of the present invention, the method further comprises detecting when the strength of the oscillation at the at least one frequency exceeds a third (e.g. tripping) threshold, indicating a trip situation; if the trip situation is indicated, performing at least one of: stopping controlling the generator; stopping producing any torque at the hub due to controlling the generator; freeing the hub from turning due to generator generated torque; leaving the hub freely move, wherein the third threshold is in particular greater than the first threshold.

The third threshold may be larger than the first and second thresholds. If the strength of the oscillation is above the third threshold, the entire method may be stopped since safety requirements may not be met. The hub may then freely rotate as dictated by gravitational torque and/or load.

According to an embodiment of the present invention it is provided a method of mounting a rotor blade to a hub of a wind turbine, the hub being coupled to a generator, the method comprising: turning the hub using torque generated by the generator towards a target hub azimuthal position, thereby performing a method according to any one of the preceding embodiments; wherein the target hub azimuthal position is reached, performing at least one of: fixing the hub relative to a stationary portion of the wind turbine; mounting the rotor blade, in particular when being in a horizontal orientation, to the hub.

Thereby, during the mounting of the rotor blade, it may be avoided that one or more oscillations at one or more frequencies disturb the mounting method. Thereby, the mounting of the rotor blade may be accelerated compared to conventional mounting methods.

It should be understood, that features, individually or in any combination, disclosed, described, applied or explained in the context or for a method of rotor positioning or of preparing for mounting/unmounting a rotor blade to a hub of a wind turbine may also be, individually or in any combination, applied for or provided for an arrangement for rotor positioning or for preparing for mounting to or unmounting a rotor blade from a hub of a wind turbine according to embodiments of the present invention and vice versa.

According to an embodiment of the present invention it is provided an arrangement for rotor positioning or for preparing for mounting/unmounting a rotor blade to a hub of a wind turbine, the hub being mechanically coupled to a rotor of a generator, the arrangement comprising: a signal generator (or controller module) adapted to generated control signals to control the generator in order to generate torque in order to turn the hub; an input port adapted to receive signals regarding a quantity indicative of an oscillation of the hub and/or a drive train; a processor adapted to process the quantity in order to derive a strength of the oscillation at at least one frequency; a logic module adapted to detect when the strength of the oscillation at at least one frequency exceeds a first threshold, thereby indicating a critical situation; if the critical situation is indicated: the arrangement is adapted to reduce a reference rotational speed for turning the hub by generator produced torque; the signal generator is adapted to generate control signals based on the reduced reference rotational speed for controlling the generator, wherein the arrangement is in particular adapted to carry out or control a method according to any one of the preceding embodiments.

The arrangement may be capable of carrying out or controlling a method of rotor positing or of preparing for mounting/unmounting a rotor blade to a hub of a wind turbine according to embodiments of the present invention. The arrangement may be implemented in software and/or hardware and/or may be a part of a wind turbine controller for example.

According to an embodiment of the present invention it is provided a wind turbine, comprising: a generator; in particular a converter electrically connected to the generator for controlling the generator; a hub mechanically, in particular directly, coupled to a rotor of the generator; and an arrangement according to the preceding embodiment connected to control the generator, in particular via the converter.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an embodiment of the present invention;
Figs. 2 to 6 illustrate graphs indicating showing evolutions of quantities as observed during performing a method according to an embodiment of the present invention; and
Fig. 7 illustrates reference rotational speeds according to embodiments of the present invention.

### Detailed Description

The illustration in the drawings is in schematic form.

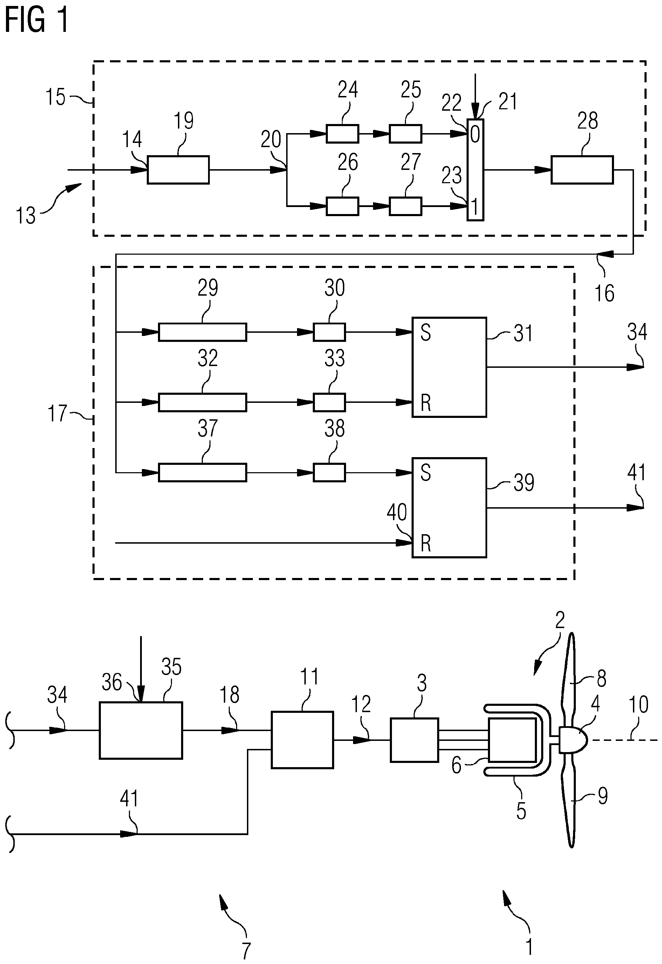

The wind turbine 1 schematically illustrated in Fig. 1 comprises a generator 2, in particular a permanent magnet synchronous generator. The wind turbine 1 further comprises a converter 3 which is electrically connected to the generator 2 for controlling the generator 2 and converting power. A hub 4 is mechanically coupled to a rotor 5 of the generator 2. The generator 2 comprises a not in detail illustrated stator 6 having three phase stator windings which are connected to the converter 3.

The wind turbine 1 further comprises an arrangement 7 for preparing for mounting a rotor blade 8 to the hub 4 of the wind turbine 1. In the illustrated embodiment, another rotor blade 9 is already mounted at the hub 4 but the rotor blade 8 is still not mounted at the hub 4. For mounting the rotor blade 8, the hub 4 being connected to the rotor 5 of the generator 2 must first be rotated around a rotation axis 10 to an azimuthal target position. The unmounted rotor blade 8 is for example hold by a crane which is not illustrated.

The arrangement 7 comprises a signal generator 11 which is adapted to generate control signals 12 to control the generator 2, in particular via the converter 3, in order to generate torque in order to turn the hub 4 around the rotational axis 10. The arrangement 7 further comprises an input port 13 which is adapted to receive signals 14 regarding a quantity indicative of an oscillation of the hub 4 and/or a not in detail illustrated drive train. The arrangement 7 further comprises a processor 15 which is adapted to process the quantity 14 in order to derive a strength 16 of the oscillation at at least one frequency. The arrangement 7 further comprises a logic module 17 adapted to detect when the strength 16 of the oscillation at at least one frequency exceeds a first threshold, thereby indicating a critical situation.

The arrangement 7 is further adapted, if the critical situation is indicated, to reduce a reference rotational speed to a reduced value of the reference rotational speed 18 for turning the hub 4 by the generator produced torque. The signal generator 11 is thereby adapted to generate control signals 12 based on the reduced reference rotational speed 18 for controlling the generator 2. The arrangement 7 is adapted to carry out a method of preparing for mounting a rotor blade to a hub of a wind turbine according to embodiments of the present invention.

In the present illustrated embodiment, the processing the quantity 14 in order to derive the strength 16 of the oscillation at at least one frequency comprises to receive the raw signal 14 of the quantity and to apply a bandpass filter 19, such as for example a second order bandpass filter, in order to derive a bandpass filtered signal 20. According to a demodulator select signal 21, different types of manners how to derive an actual strength 22 or 23 of the oscillation is calculated. An RMS module 24 determines the root mean square signal and the root module 25 applies the root function in order to arrive at the signal 22. An absolute value determination module 26 determines the absolute value of the filtered raw signal 20 and a peak determination module 27 determines the peak value in order to derive the signal 23. Signal 22 or signal 23 is selected and supplied to a low-pass filter 28 which performs low-pass filtering in order to derive the strength of the oscillation 16.

The strength 16 of the oscillation is then supplied to the logic module 17. In a module 29 it is determined whether the strength 16 of the oscillation is above a first threshold (pause threshold). The logical output of the module 29 is delayed by a delay module 30 and supplied to a set input of a latch module 31.

The comparison module 32 determines whether the strength 16 of the oscillation is below a second threshold (a resume threshold). The logical output of the module 32 is delayed by another delay element 33 and supplied to a reset input of the latch module 31. The output signal 34 of the latch module 31 will be high when the strength of the oscillation 16 is above the first threshold but below the second threshold. The output signal 34 of the logic module 17 is supplied to a reference determination module 35 which may also receive a nominal reference rotational speed 36. The reference determination module 35 then determines based on the logic output signal 34 and the nominal reference rotational speed 36 the actual reference speed 18 which may be a reduced rotational reference speed.

The logic module 17 comprises in the illustrated embodiment further another comparison module 37 which assesses whether the strength 16 of the oscillation is greater than a third threshold and the output of the comparison module 37 is supplied to a further delay element 38 and the output of the delay element 38 is supplied to a set input of another latch module 39. The latch module 39 receives at a reset input a trip reset signal 40 which enables to reset the trip. The output 41 of the latch module 39 indicates whether the strength 16 of the oscillation is larger than the third threshold and at the same time there is no trip reset high signal 40 received. The output 41 of the latch module 39 is also received by the signal generator 11. If the trip signal 41 is high, the signal generator 11 will generate control signals 12, in order to stop controlling the generator 2 thus, not producing torque any more the hub is allowed to freely rotate according to gravitational torque or load.

When the output signal 41 of the latch module 39 is high, the method may include to stop controlling the generator 2 and/or stopping producing any torque due to controlling the generator and/or freeing the hub from turning due to generator generated torque and/or leaving the hub freely to move or rotate.

In the illustrated embodiment, the quantity 14 indicative of the oscillation is represented or is derived or is equal to the rotational speed of the hub 4. In other embodiments, the quantity 14 indicative of the oscillation may include an angular or azimuthal position of the hub 4, i.e., a position of rotation relative or about the rotation axis 10.

The entire wind turbine 1 may further be adapted to carry out or control a method of mounting a rotor blade 8 to a hub 4 of a wind turbine 1. Thereby, the hub 4 may be turned using torque generated by the generator 2 towards a target hub azimuthal position, thereby a method according to one of the above indicated embodiments of preparing for mounting a rotor blade may be performed.

When the target hub azimuthal position is reached, the hub 4 may be fixed relative to a stationary portion of the wind turbine 1 and finally the still unmounted wind turbine blade 8 may be mounted when in the horizontal orientation to the hub 4.

Embodiments of the present invention may address problems with oscillations at specific frequencies which have been encountered during long-range movements of turbine blades. Such frequencies may relate to the blade edge first and second modes, centered around 0.7 and 1.7 Hz, respectively. Another frequency may occur at 0.12 Hz with unknown origin. Other frequencies may also be present.

According to embodiments of the present invention, a software solution which monitors oscillations in the encoder speed feedback signal and pauses rotation until the oscillations decay is suggested according to embodiments of the present invention. In the illustration in Fig. 1 at least the processor and the logic as well as the entire arrangement 7 may be considered as a software implementation.

In the embodiment illustrated in Fig. 1, only one "pause/resume" path is shown which is tuned for a specific frequency via the second order bandpass filter 19. However, the block diagram can be multiplexed or duplicated with another (or even more) bandpass filter(s) to monitor other frequencies. In the current software implementation, there are four parallel paths. The pause/resume feature can be triggered by any of these paths.

The quantity 14 indicative of the oscillation may be for example the encoder speed feedback signal which is passed through the bandpass filter 19 which is tuned for a specific frequency. The filtered signal can be demodulated either by taking the rolling window RMS value or the absolute value ABS. A low-pass filter 28 then smooths out any noise in the signal. If the oscillations exceed the pause threshold (the first threshold), then the rotor movement is stopped. Once the oscillation falls below the resume threshold (second threshold), rotor movement is resumed. There is a trip threshold (third threshold), if the amplitude becomes much too high for performing the "pause/resume" method or feature. Operation may then immediately be stopped. The trip reset signal can unlatch this trip.

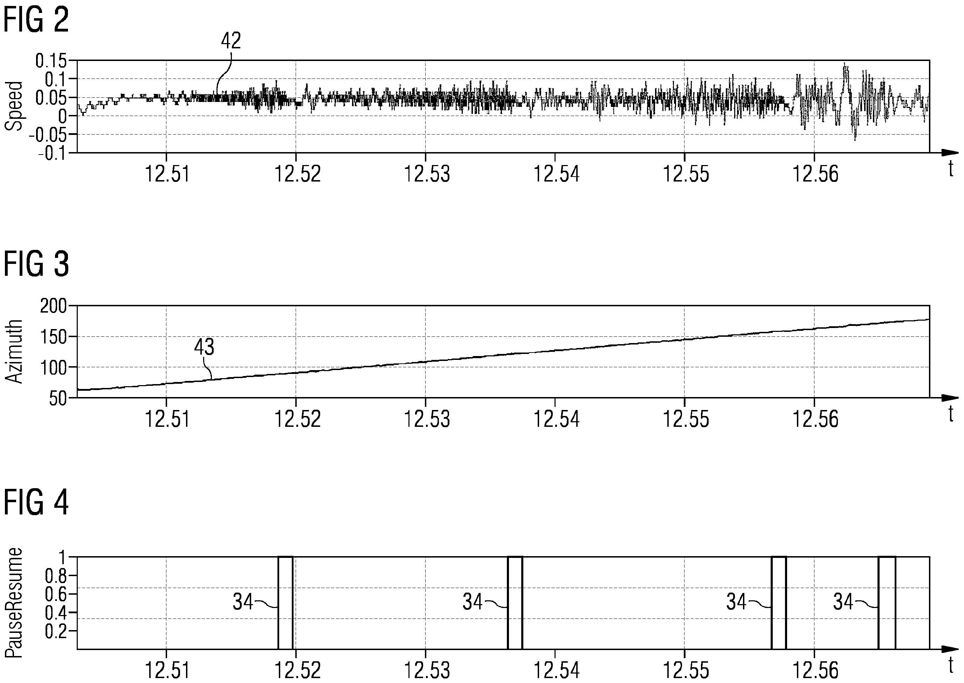

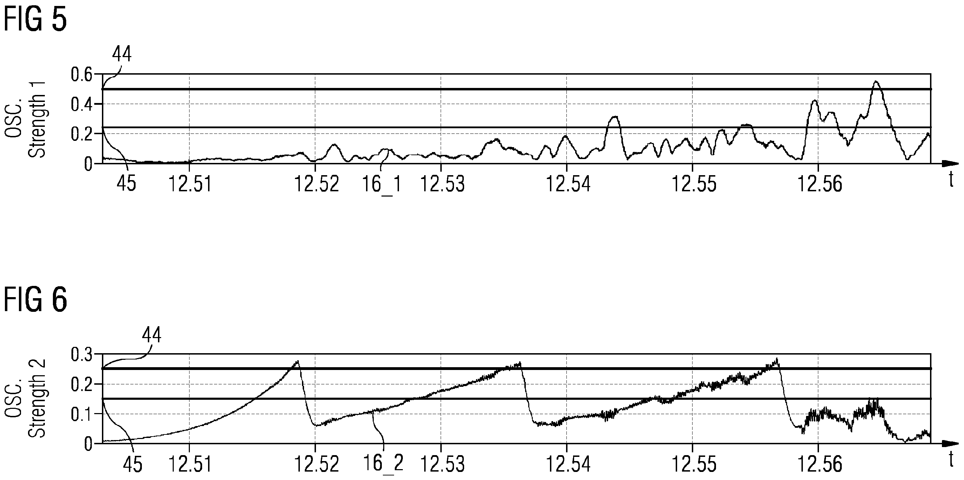

**Figs. 2 to 6** illustrate quantities while a method of preparing for mounting a rotor blade is performed according to an embodiment of the present invention. The abscissas of the plots of Figs. 2 to 6 indicate the time, Fig. 2 indicates the rotational speed 42 of the hub 4, Fig. 3 indicates the azimuthal position 43 of the hub, Fig. 4 indicates the output 34 of the latch module 31, i.e., the pause/resume logical value (a value of one indicating the pause feature, the value of zero indicating the resume state). The Fig. 5 illustrates the strength 16_1 of an oscillation at a first frequency and Fig. 6 illustrates the strength 16_2 of the oscillation at a second frequency. Furthermore, in Figs. 5 and 6, the first threshold 44 and the second threshold (resume threshold) 45 are indicated.

When the oscillation magnitude or strength 16_1 or 16_2 exceeds the first threshold 44, a pause flag is raised as indicated in the trace 34 in Fig. 4. Oscillations in the rotor speed are then seen to die down when the resume threshold is crossed. When the signals 16_1, 16_2 i.e. the strength of the oscillations at the different frequencies both fall below the second threshold (resume threshold), the pause flag 34 is removed (set to zero) and the rotor continues moving, in particular with the nominal reference rotational speed.

Oscillations in the rotor speed are seen to increase again triggering another instance of pause. In the traces shown in Figs. 2 to 6, there are four instances of pause/resume.

Embodiments of the present invention provide a software-based solution which may be suitable for position based on speed-based control strategies. The scheme of Fig. 1 can be duplicated or multiplexed to include more frequencies of different oscillations. Embodiments may provide additional protection for the blade by preventing unintended trips and reducing forces that are blade-induced during installation.

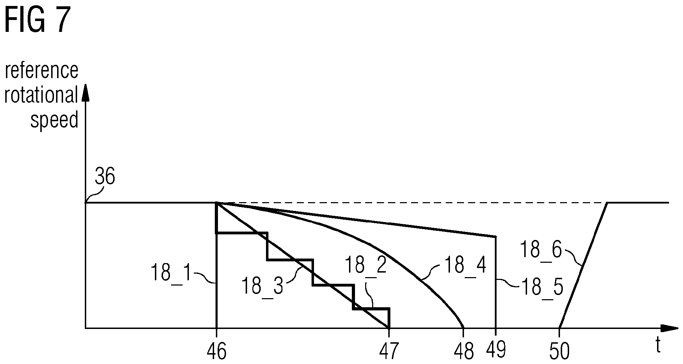

**Fig. 7** illustrates a coordinate system having as abscissa the time and having as an ordinate the reference rotational speed of the generator. At the beginning, the reference rotational speed is at a nominal reference rotational speed 36. At a point in time 46, a critical situation is indicated. According to curve 18_1, the reference rotational speed is immediately dropped to zero at the point in time 46. According to the further curve 18_2, the reference rotational speed is decreased step-wise until it reaches the value zero at a point in time 47. According to the curve 18_3, the reference rotational speed is linearly decreased from the nominal reference rotational speed 36 to zero. According to curve 18_4, the reference rotational speed is decreased from the nominal reference rotational speed 36 to zero in a curved manner. According to curve 18_5, the reference rotational speed is decreased in a first section in a linear decreasing manner and in a second section in a step-wise manner until zero at the point in time 49. At a point in time 50, the strength of the oscillation falls below the second threshold so that it is indicated that the critical situation is over. According to the curve 18_6, the reference rotational speed is increased from zero to the nominal reference rotational speed 36 in a linear manner. Other curves of decrease/increase may be applied.

In Fig. 7 ramp down (of reference speed) may start when oscillation strength is above a Pause threshold, ramp up (of reference speed) may start when oscillation strength is below a Resume threshold.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of rotor positioning and/or of preparing for mounting and/or unmounting a rotor blade (8) to a hub (4) of a wind turbine (1), the hub being mechanically coupled to a rotor (5) of a generator (2), the method comprising:
controlling the generator (2), in order to turn the hub (4) using torque generated by the generator (2), in particular according to a reference rotational speed;
monitoring a quantity (14) indicative of an oscillation of the hub and/or a drive train;
processing the quantity (14) in order to derive a strength (16) of the oscillation at at least one frequency;
detecting when the strength (16) of the oscillation at at least one frequency exceeds a first, in particular frequency dependent, threshold (44), thereby indicating a critical situation;
if the critical situation is indicated:
reducing a reference rotational speed (18) for turning the hub (4) by generator produced torque;
controlling the generator (2) based on the reduced reference rotational speed (18_1, 18_2,...).

2. Method according to the preceding claim, wherein, if the critical situation is indicated, the reference rotational speed (18) is reduced from a nominal reference rotational speed (36), in particular between 0.03 and 0.07 rpm, or substantially 0.05 rpm, in a linear manner and/or in a step-wise manner and/or according to a non-linear manner and/or a combination thereof.

3. Method according to any of the preceding claims, wherein, if the critical situation is indicated and/or endures, the method comprises at least one of:
switching from speed control to position control;
switching from position control with none stiff gains to stiff gains;
reducing the reference rotational speed (18) to zero;
stopping turning the hub (4) by stopping movement of the hub due to generator generated torque;
holding the hub (4) at the position which was reached when the strength of the oscillation started exceeding the first threshold;
generating torque by the generator (2) to hold the hub (4) at a fixed position.

4. Method according to any of the preceding claims, further comprising:
detecting when the strength (16) of the oscillation at at least one frequency falls below a second threshold (45), indicating that the critical situation is over;
if the critical situation is indicated to be over, performing at least one of:
stopping reducing the reference rotational speed (18) ;
increasing the, in particular reduced, reference rotational speed (18), in particular to the nominal reference rotational speed (36);
resuming turning the hub (4), in particular with
the nominal reference rotational speed,
wherein the first threshold is in particular greater than the second threshold.

5. Method according to any of the preceding claims, wherein the quantity (14) indicative of the oscillation includes at least one of the following:
an angular or azimuthal position of the hub (4);
a rotational speed of the hub (4); and/or
wherein controlling the generator is further based on azimuthal position control and/or rotational speed control.

6. Method according to any of the preceding claims, wherein processing the quantity in order to derive the strength (16) of the oscillation at at least one frequency comprises at least one of:
receiving a raw signal (14) of the quantity;
applying a bandpass filter to the raw signal;
determining an intensity and/or amplitude and/or peak to peak distance of the filtered raw signal (20), indicating the actual strength;
applying a low pass filter (28) to the actual strength (22, 23) to obtain the strength (16).

7. Method according to any of the preceding claims,
wherein the at least one frequency comprises at least one resonance frequency of a drive train, including the hub and/or a rotor of the generator and/or already mounted one or more, in particular three, rotor blades, in particular at least one blade edge frequency,
the at least one frequency in particular being between 0.1 Hz and 10 Hz.

8. Method according to any of the preceding claims, wherein the method is performed for positioning the hub (4) to a target azimuthal position, in order to mount the rotor blade (8) being in a horizontal orientation.

9. Method according to any of the preceding claims,
wherein controlling the generator (2) is via a converter (3) connected to the generator (2); and/or
wherein the generator (2) is a permanent magnet synchronous generator; and/or
wherein the generator rotor (5) is an outer or outer rotor.

10. Method according to any of the preceding claims, further comprising:
detecting when the strength (16) of the oscillation at the at least one frequency exceeds a third threshold, indicating a trip situation;
if the trip situation is indicated, performing at least one of:
stopping controlling the generator (2);
stopping producing any torque at the hub due to controlling the generator (2);
freeing the hub (4) from turning due to generator generated torque;
leaving the hub (4) freely move,
wherein the third threshold is in particular greater than the first threshold.

11. Method of mounting and/or unmounting a rotor blade (8) to a hub (4) of a wind turbine (1), the hub (4) being coupled to a generator (2), the method comprising:
turning the hub (4) using torque generated by the generator (2) towards a target hub azimuthal position, thereby performing a method according to any one of the preceding claims;
when the target hub azimuthal position is reached, performing at least one of:
fixing the hub (4) relative to a stationary portion of the wind turbine (1);
mounting the rotor blade (8), in particular when being in a horizontal orientation, to the hub (4).

12. Arrangement for rotor positioning or for preparing for mounting to and/or unmounting a rotor blade (8) from a hub (4) of a wind turbine (1), the hub being mechanically coupled to a rotor (5) of a generator (2), the arrangement comprising:
a signal generator (11) adapted to generated control signals (12) to control the generator (2) in order to generate torque in order to turn the hub (4);
an input port (13) adapted to receive a signal (14) regarding a quantity indicative of an oscillation of the hub (4) and/or a drive train;
a processor (15) adapted to process the quantity (14) in order to derive a strength (16) of the oscillation at at least one frequency;
a logic module (17) adapted to detect when the strength (16) of the oscillation at at least one frequency exceeds a first threshold (44), thereby indicating a critical situation;
if the critical situation is indicated:
the arrangement is adapted to reduce a reference rotational speed (18) for turning the hub (4) by generator produced torque;
the signal generator (11) is adapted to generate control signals (12) based on the reduced reference rotational speed (18_1, 18_2, ...) for controlling the generator,
wherein the arrangement is in particular adapted to carry out or control a method according to any one of the preceding claims.

13. Wind turbine (1), comprising:
a generator (2);
in particular a converter (3) electrically connected to the generator (2) for controlling the generator;
a hub (4) mechanically, in particular directly, coupled to a rotor (5) of the generator (2); and
an arrangement (7) according to the preceding claim connected to control the generator (2), in particular via the converter (3).
